(19) Europäisches Patentamt
European Patent Office
Office européen des brevets

(11) **EP 4 742 810 A1**

(12) **EUROPEAN PATENT APPLICATION**
published in accordance with Art. 153(4) EPC

(43) Date of publication:
**13.05.2026 Bulletin 2026/20**

(21) Application number: **24835163.7**

(22) Date of filing: **28.05.2024**

(51) International Patent Classification (IPC):
**H04W 74/08** (2024.01)      **H04L 1/18** (2023.01)
**H04L 5/00** (2006.01)

(52) Cooperative Patent Classification (CPC):
**H04L 1/18; H04L 5/00; H04W 72/0446;
H04W 72/0453; H04W 72/23; H04W 74/08**

(86) International application number:
**PCT/CN2024/095722**

(87) International publication number:
**WO 2025/007680 (09.01.2025 Gazette 2025/02)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **04.07.2023 CN 202310812558**

(71) Applicant: **Datang Mobile Communications
Equipment Co., Ltd.
Beijing 100085 (CN)**

(72) Inventors:
• **BAI, Wei
  Beijing 100085 (CN)**
• **MIAO, Deshan
  Beijing 100085 (CN)**

(74) Representative: **Studio Torta S.p.A.
Via Viotti, 9
10121 Torino (IT)**

(54) **INFORMATION TRANSMISSION METHOD AND APPARATUS, TERMINAL, AND NETWORK DEVICE**

(57)     The present disclosure provides an information transmission method and device, a user equipment and a network device, and relates to the technical field of communications. The information transmission method performed by the UE includes: determining a transmission resource according to a meta bit corresponding to uplink data; wherein the meta bit is a bit stream generated based on encoding the uplink data; detecting feedback information transmitted by a network device for the uplink data, on the transmission resource.

```
┌─────────────────────────────────────────────────────────────┐
│ determining a transmission resource according to a meta bit  │──S201
│ corresponding to uplink data                                 │
└─────────────────────────────────────────────────────────────┘
                              │
                              ▼
┌─────────────────────────────────────────────────────────────┐
│ detecting the feedback information of the uplink data        │──S202
│ transmitted by a network device on the transmission resource │
└─────────────────────────────────────────────────────────────┘
```

FIG. 2

EP 4 742 810 A1

## Description

The present application is filed based on and claims the priority of Chinese Application No. 202310812558.9 filed on July 4, 2023, entitled "information transmission method and device, user equipment and network device", the disclosure of which are incorporated in their entireties by reference herein.

## TECHNICAL FIELD

The present disclosure relates to the field of communication technology, and in particular to an information transmission method and device, user equipment and network device.

## BACKGROUND

Uncoordinated random access and transmission technology is an integrated upgrade of random access technology and multiple access transmission technology. It no longer treats initial access and data transmission as two independent procedures, but integrates them into one procedure to support access and transmission of massive number of terminals, reduce latency, and improve a success rate of access and transmission.

For uncoordinated non-orthogonal multiple access technology, there is no UE-specific coordination information between network device (such as the next generation Node B (gNB)) and user equipment (UE), except for coordination information such as master information block (MIB) and system information block (SIB), and there is even no allocated physical layer UE identifier (ID) (such as cell radio network temporary identifier (C-RNTI)). Consequently, the gNB is unable to allocate hybrid automatic repeat request (HARQ-ACK) channel resources for the UE and unable to ensure accurate transmission of feedback information for uplink data (such as physical uplink shared channel (PUSCH)).

## SUMMARY

Embodiments of the present disclosure provide an information transmission method and device, user equipment and network device, which can ensure accurate transmission of feedback information of uplink data in uncoordinated non-orthogonal multiple access.

In order to solve the above technical problem, one embodiment of the present disclosure provides an information transmission method, performed by a user equipment (UE), including:

    determining a transmission resource according to a meta bit corresponding to uplink data; wherein the meta bit is a bit stream generated based on encoding the uplink data;
    detecting feedback information transmitted by a network device for the uplink data, on the transmission resource.

In some embodiments, before determining the transmission resource according to the meta bit corresponding to the uplink data, the method further includes:

    receiving resource configuration information transmitted by the network device; wherein the resource configuration information is used to indicate at least one transmission resource and an identifier corresponding to each transmission resource;
    wherein the resource configuration information includes at least one of the following: a quality of slots, a quantity of resources in each slot, time domain symbol resource position, frequency domain resource position, and an orthogonal sequence set.

In some embodiments, the determining a transmission resource according to a meta bit corresponding to uplink data, includes:

    determining a target identifier according to the meta bit corresponding to the uplink data;
    determining a resource corresponding to the target identifier as the transmission resource.

In some embodiments, the determining a target identifier according to the meta bit corresponding to the uplink data, includes:

    using the meta bit to perform a modulo operation on a total number of transmission resources configured by the network device to obtain a target identifier; or,
    inputting the meta bit into a preset encoder, and determining an output result as a target identifier.

In some embodiments, after detecting feedback information transmitted by a network device for the uplink data, on the transmission resource, the method further includes:
if the feedback information indicates that the network device has not correctly received the uplink data, detecting downlink control information transmitted by the network device by using the meta bit, wherein the downlink control information is used to schedule the UE to retransmit the uplink data.

In some embodiments, the downlink control information is scrambled with the meta bit.

One embodiment of the present disclosure provides an information transmission method, performed by a network device, including:

obtaining a transmission resource according to a meta bit transmitted by the UE; wherein the meta bit is a bit stream generated based on encoding the uplink data;
transmitting feedback information of the uplink data to the UE via the transmission resource.

In some embodiments, before obtaining a transmission resource according to a meta bit transmitted by the UE, the method further includes:

transmitting resource configuration information to the UE; where the resource configuration information is used to indicate at least one transmission resource and an identifier corresponding to each transmission resource;
wherein the resource configuration information includes at least one of the following: a quality of slots, a quantity of resources in each slot, time domain symbol resource position, frequency domain resource position, and an orthogonal sequence set.

In some embodiments, the obtaining a transmission resource according to a meta bit transmitted by the UE, includes:

determining a target identifier according to the meta bit;
determining a resource corresponding to the target identifier as the transmission resource.

In some embodiments, the determining a target identifier according to the meta bit, includes:

using the meta bit to perform a modulo operation on the total number of transmission resources configured by the network device to obtain a target identifier; or,
inputting the meta bit into a preset encoder, and determining an output result as a target identifier.

In some embodiments, the transmitting feedback information of the uplink data to the UE via the transmission resource, includes at least one of the following:

in case where the transmission resource corresponds to at least two UEs, if it is determined that uplink data of at least one UE among the at least two UEs is not correctly received, transmitting feedback information of the uplink data to the at least two UEs through the transmission resource, where the feedback information is used to indicate that the network device has not correctly received the uplink data;
in case where the transmission resource corresponds to at least two UEs, if it is determined that the uplink data of at least one UE among the at least two UEs is correctly received, transmitting feedback information of the uplink data to the at least two UEs through the transmission resource, where the feedback information is used to indicate that the network device correctly receives the uplink data.

In some embodiments, after transmitting feedback information of the uplink data to the UE via the transmission resource, the method further includes:
if it is determined that the uplink data transmitted by the UE is not correctly received, transmitting downlink control information to the UE, where the downlink control information is used to schedule the UE to retransmit the uplink data.

In some embodiments, the downlink control information is scrambled with the meta bit.

One embodiment of the present disclosure provides a user equipment (UE), including: a memory, a transceiver, and a processor;
wherein the memory is used to store a computer program; the transceiver is used to transmit and receive data under control of the processor; and the processor is used to read the computer program in the memory to perform the following operations:

determining a transmission resource according to a meta bit corresponding to uplink data; wherein the meta bit is a bit stream generated based on encoding the uplink data;

detecting feedback information transmitted by a network device for the uplink data, on the transmission resource.

In some embodiments, the processor is used to read the computer program in the memory to perform the following operations:

receiving resource configuration information transmitted by the network device; wherein the resource configuration information is used to indicate at least one transmission resource and an identifier corresponding to each transmission resource;

wherein the resource configuration information includes at least one of the following: a quality of slots, a quantity of resources in each slot, time domain symbol resource position, frequency domain resource position, and an orthogonal sequence set.

In some embodiments, the processor is used to read the computer program in the memory to perform the following operations:

determining a target identifier according to the meta bit corresponding to the uplink data;

determining a resource corresponding to the target identifier as the transmission resource.

In some embodiments, the processor is used to read the computer program in the memory to perform the following operations:

using the meta bit to perform a modulo operation on a total number of transmission resources configured by the network device to obtain a target identifier; or,

inputting the meta bit into a preset encoder, and determining an output result as a target identifier.

In some embodiments, the processor is used to read the computer program in the memory to perform the following operations:

if the feedback information indicates that the network device has not correctly received the uplink data, detecting downlink control information transmitted by the network device by using the meta bit, wherein the downlink control information is used to schedule the UE to retransmit the uplink data.

In some embodiments, the downlink control information is scrambled with the meta bit.

One embodiment of the present disclosure provides a network device, including: a memory, a transceiver, and a processor;

wherein the memory is used to store a computer program; the transceiver is used to transmit and receive data under control of the processor; and the processor is used to read the computer program in the memory to perform the following operations:

obtaining a transmission resource according to a meta bit transmitted by a user equipment (UE); wherein the meta bit is a bit stream generated based on encoding the uplink data;

transmitting feedback information of the uplink data to the UE via the transmission resource.

In some embodiments, the processor is used to read the computer program in the memory to perform the following operations:

transmitting resource configuration information to the UE; where the resource configuration information is used to indicate at least one transmission resource and an identifier corresponding to each transmission resource;

wherein the resource configuration information includes at least one of the following: a quality of slots, a quantity of resources in each slot, time domain symbol resource position, frequency domain resource position, and an orthogonal sequence set.

In some embodiments, the processor is used to read the computer program in the memory to perform the following operations:

determining a target identifier according to the meta bit;

determining a resource corresponding to the target identifier as the transmission resource.

In some embodiments, the processor is used to read the computer program in the memory to perform the following operations:

using the meta bit to perform a modulo operation on the total number of transmission resources configured by the network device to obtain a target identifier; or,

inputting the meta bit into a preset encoder, and determining an output result as a target identifier.

In some embodiments, the processor is used to read the computer program in the memory to perform at least one of the following:

in case where the transmission resource corresponds to at least two UEs, if it is determined that uplink data of at least one UE among the at least two UEs is not correctly received, transmitting feedback information of the uplink data to the at least two UEs through the transmission resource, where the feedback information is used to indicate that the network device has not correctly received the uplink data;

in case where the transmission resource corresponds to at least two UEs, if it is determined that the uplink data of at least one UE among the at least two UEs is correctly received, transmitting feedback information of the uplink data to the at least two UEs through the transmission resource, where the feedback information is used to indicate that the network device correctly receives the uplink data.

In some embodiments, the processor is used to read the computer program in the memory to perform the following operations:

if it is determined that the uplink data transmitted by the UE is not correctly received, transmitting downlink control information to the UE, where the downlink control information is used to schedule the UE to retransmit the uplink data.

In some embodiments, the downlink control information is scrambled with the meta bit.

One embodiment of the present disclosure provides an information transmission device, applied to a user equipment (UE), including:

a determining unit used to determine a transmission resource according to a meta bit corresponding to uplink data; wherein the meta bit is a bit stream generated based on encoding the uplink data;

a first detection unit used to detect feedback information transmitted by a network device for the uplink data, on the transmission resource.

One embodiment of the present disclosure provides an information transmission device, applied to a network device, including:

an obtaining unit used to obtain a transmission resource according to a meta bit transmitted by the UE; wherein the meta bit is a bit stream generated based on encoding the uplink data;

a first transmission unit used to transmit feedback information of the uplink data to the UE via the transmission resource.

One embodiment of the present disclosure provides a processor-readable storage medium, including: a computer program stored thereon; wherein the computer program is used to cause a processor to execute the above method.

The beneficial effects of the present disclosure are as follows.

Through the above technical solution, the transmission resource is determined according to a meta bit corresponding to uplink data, and the feedback information of the uplink data transmitted by a network device is detected on the transmission resource, so that the transmission resources can be accurately determined based on the meta bit, thereby ensuring accurate transmission of feedback information for uplink data in non-coordinated non-orthogonal multiple access.

**BRIEF DESCRIPTION OF THE DRAWINGS**

To better clarify technical solutions of embodiments of the present disclosure or in the related art, drawings used in descriptions of the embodiments or in the related art are briefly introduced hereinafter. Apparently, the described drawings merely illustrate some embodiments of the present disclosure. A person ordinary skilled in the art can obtain other drawings based on these drawings without any creative efforts.

FIG. 1 is a structural diagram of a network system applicable to embodiments of the present disclosure;
FIG. 2 is a first flowchart of an information transmission method according to an embodiment of the present disclosure;

FIG. 3 is a second flowchart of an information transmission method according to an embodiment of the present disclosure;

FIG. 4 is a schematic diagram showing units of an information transmission device according to an embodiment of the present disclosure;

FIG. 5 is a block diagram of a user equipment according to an embodiment of the present disclosure;

FIG. 6 is a schematic diagram showing units of an information transmission device according to an embodiment of the present disclosure; and

FIG. 7 is a schematic diagram of a network device according to an embodiment of the present disclosure.

## DETAILED DESCRIPTION

The technical solutions in embodiments of the present application are described clearly and completely in conjunction with drawings in the embodiments of the present application. Apparently, the described embodiments are merely a part of rather than all the embodiments of the present application. All other embodiments obtained by a person ordinary skilled in the art based on the embodiments of the present application without any creative efforts fall within the protection scope of the present application.

Terms such as "first" and "second" in the specification and the claims of the present application are used to distinguish similar objects and are not necessarily used to describe a specific order or sequence. It is to be understood that data used in this way may be interchanged under appropriate circumstances, so that the embodiments of the present application described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent to the process, method, product, or device.

The term "and/or" in the embodiments of the present application describes an association relationship of associated objects, which indicates that there may be three types of relationships. For example, A and/or B may represent three situations: only A being included, both A and B being included, only B being included. The character "/" generally indicates that there is an "or" relationship between associated objects in front of it and behind it. The term "multiple" in the embodiments of the present application refers to two or more than two, and other words for expressing quantities are similar to it.

In embodiments of the present application, the expressions such as "exemplary" or "for example" are used to indicate an example, illustration, or description. Any embodiment or design solution described as "exemplary" or "for example" in the embodiments of the present application should not be construed as being preferred or advantageous over other embodiments or design solutions. Rather, the use of the expressions such as "exemplary" or "for example" is intended to present the relevant concepts in a specific manner.

Embodiments of the present application are described hereinafter in connection with the drawings. The information transmission method and device, user equipment and the network device according to embodiments of the present application may be applied to a radio communication system. The radio communication system may be a system employing a fifth generation (5G) mobile communication technology (hereinafter referred to as a 5G system), and it can be understood by those skilled in the art that the 5G NR system is only an example and is not a limitation.

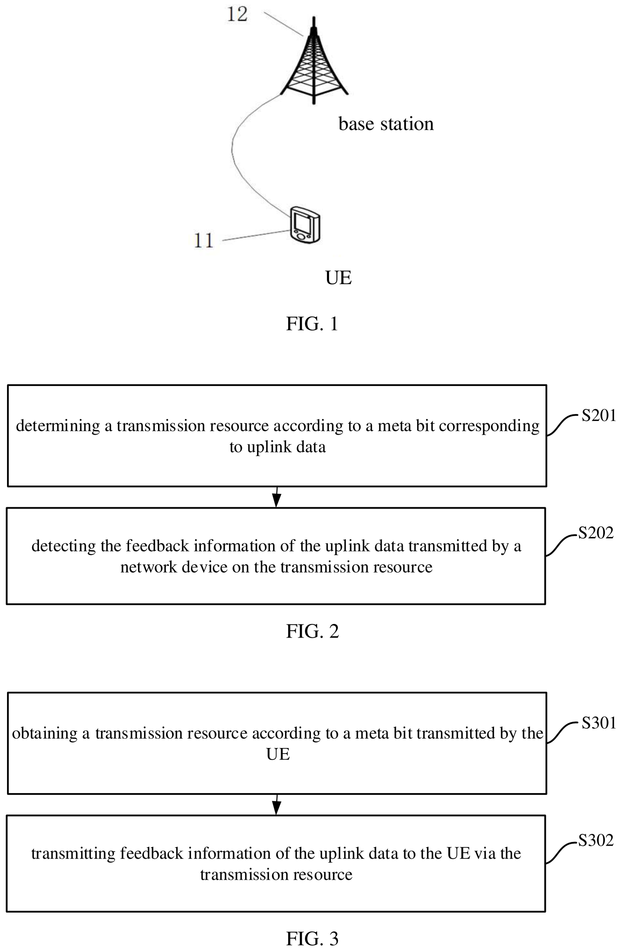

Referring to FIG. 1, FIG. 1 is a structural diagram of a network system to which embodiments of the present application may be applied. As shown in FIG. 1, the network system includes a user terminal 11 and a base station 12. The user terminal 11 may be a user equipment (UE), for example, it may be a cellular phone, a tablet personal computer, a laptop computer, a personal digital assistant (PDA), a mobile internet device (MID), or a wearable device or other terminal-side devices. It is to be noted that in the embodiments of the present application, the specific type of the user terminal 11 is not limited in the embodiments of the present application. The above base station 12 may be a base station of 5G or of a later version (e.g., gNB, 5G NR NB), or a base station in other communication systems, or referred to as a node B. It is to be noted that in the embodiments of the present application, a 5G base station is only taken as an example, and the specific type of the base station 12 is not limited.

First, based on the technical solutions provided by the present disclosure, some technical terms that may be involved are introduced.

Background of uncoordinated non-orthogonal multiple access technology

One processing process of UE-side uncoordinated non-orthogonal multiple access technology (URAT) solution is as follows.

(1) Meta bits (also called metadata bits) are generated from information bits (including UE ID) of to-be-transmitted data. Specifically, cyclic redundancy check (CRC) of information bits can be used as meta bits.

It is to be noted that the meta bit is a bit stream generated by encoding information bits of the to-be-transmitted data. For example, one encoding mode is CRC encoding, and the information bits of the to-be-transmitted data are processed by a CRC encoder, resulting in a 16-bit stream; another encoding mode is to take the first X bits of information of the to-be-transmitted data, that is, information of the to-be-transmitted data is processed by the CRC encoder, resulting in an X-bit bit stream.

(2) The metadata bits, after undergoing index modulation, are carried by a preamble, and the transmitted preamble is also used to implement random access.

(3) The information bits undergo extremely low rate coding followed by multi-user coding, and are subsequently carried by a PUSCH-like channel. Here, the extremely low rate coding serves to enable non-orthogonal multiple access transmission, and the multi-user coding is used to further increase a distance between coded codewords of different UEs, thereby enhancing performance of multiple access transmission.

The integration of random access and multiple access transmission is achieved through two approaches: firstly, a preamble signal for random access and data signal for multiple access transmission are multiplexed and transmitted together; secondly, meta data bits carried by the preamble are used to control multi-user coding, including scrambling, interleaving, repetition transmission patterns, redundancy version (RV), resource mapping, packet division multiple access (PDMA) spreading sequences, and power allocation.

The embodiments of the present disclosure provide an information transmission method and device, user equipment and network device, which can ensure accurate transmission of feedback information of uplink data in uncoordinated non-orthogonal multiple access.

The method and the device are based on the same application concept. Since the principles of solving the problems by the method and the device are similar, the implementation of the device and the method can refer to each other, and the repeated parts will not be repeated.

As shown in FIG. 2, one embodiment of the present disclosure provides an information transmission method, performed by a user equipment, including the following steps.

Step S201: determining a transmission resource according to a meta bit corresponding to uplink data.

It is to be noted that the transmission resource refers to a resource used to transmit feedback information corresponding to the uplink data.

In some embodiments, the meta bit is a bit stream generated based on encoding the uplink data; for example, one encoding mode is CRC encoding, and the uplink data is processed by a CRC encoder, resulting in a 16-bit stream; another encoding mode is to take the first X bits of the uplink data, that is, the uplink data is processed by the CRC encoder, resulting in an X-bit bit stream.

In some embodiments, the meta bit may be used to indicate an encoding mode interleaving mode, scrambling mode, etc. of the uplink data.

It is to be noted here that the meta bit corresponding to the uplink data of the user equipment (UE) can be used to distinguish different UEs. Based on the meta bit, the transmission resource corresponding to one UE can be determined. For example, an index of a specific transmission resource can be determined through the meta bit, and the specific transmission resource can be found based on the index.

Step S202: detecting the feedback information of the uplink data transmitted by a network device on the transmission resource.

In some embodiments, the UE may perform operations, based on an orthogonal sequence and a cyclic shift which are corresponding to the transmission resource, as well as a received signal on the transmission resource, to obtain the feedback information of the uplink data.

It is to be noted that in the embodiment of the present disclosure, the transmission resource is determined by utilizing the meta bit, and the meta bit is corresponding to the UE and can determine a unique transmission resource for the UE to transmit feedback information, so that the UE can accurately determine the resource for transmitting feedback information of the uplink data, thereby ensuring accurate transmission of feedback information of the uplink data in non-coordinated non-orthogonal multiple access.

In some embodiments, the uplink data mentioned in the embodiments of the present disclosure refers to data transmitted by the UE to the network device, which may be data transmitted via PUSCH.

In some embodiments, in one implementation, before determining the transmission resource according to the meta-bit corresponding to the uplink data, the method further includes:

receiving resource configuration information transmitted by the network device; where the resource configuration information is used to indicate at least one transmission resource and an identifier corresponding to each transmission resource.

The resource configuration information includes at least one of the following: a quality of slots, a quantity of resources in each slot, time domain symbol resource position, frequency domain resource position, and an orthogonal sequence set.

It is to be noted that the quantity of slots refers to the number of slots occupied by at least one transmission resource; the quantity of resources in each slot refers to the number of transmission occasions of the transmission resource in each slot; the time domain symbol resource position refers to a time domain symbol occupied by each transmission resource. In some embodiments, the time domain symbol resource position includes: a position of a starting symbol of each transmission resource and a quantity of symbols occupied by each transmission resource; the frequency domain resource position refers to a physical resource block (PRB) occupied by at least one transmission resource. In some embodiments, the frequency domain resource position includes: an index of a starting PRB and a quantity of occupied PRBs; the orthogonal sequence set is used to indicate orthogonal sequence information corresponding to at least one transmission resource. The orthogonal sequence set may include a quantity of orthogonal sequences in the time domain, a value of an initial cyclic shift on each PRB, and a quantity of cyclic shifts on each PRB.

It is to be noted that the UE can know a total number of transmission resources specifically configured by the network device through the resource configuration information. Since positions of transmission resources are related to I signals, Q signals, time domain, and frequency domain, the network device can associate the transmission resources with their respective identifiers by performing resource configuration in an order based on ascending resource identifiers: first by I/Q, then by frequency domain, and finally by time domain.

In some embodiments, the transmission resource may be a physical downlink feedback channel (PDFCH) resource.

It is to be noted that each transmission resource corresponds to an identifier (i.e., a resource identifier); in some embodiments, the identifier may be a number or index of the resource.

It can be understood here that the network device configures at least one transmission resource for the UE for transmitting the feedback information corresponding to the uplink data, and the UE needs to determine one or more transmission resources actually required to be detected from these transmission resources based on the meta-bit.

In some embodiments, in one implementation, the determining the transmission resource according to the meta bit corresponding to the uplink data, includes:

> determining a target identifier according to the meta bit corresponding to the uplink data;
> determining a resource corresponding to the target identifier as the transmission resource.

In some embodiments, the determining a target identifier according to the meta bit corresponding to the uplink data, includes one of the following implementations:

implementation 1: using the meta bit to perform a modulo operation on the total number of transmission resources configured by the network device to obtain a target identifier.

It is to be noted that, in the embodiment of the present disclosure, the target identifier can be determined by operating on the meta bit, and the target identifier corresponds to the identifier of the transmission resource and is used to indicate a unique transmission resource.

Implementation 2: inputting the meta bit into a preset encoder, and determining an output result as a target identifier.

It is to be noted that the number of bits output by the preset encoder should be greater than or equal to a target number of bits, and the target number of bits is the minimum number of bits that can represent the total number of transmission resources configured by the network device. Preferably, the number of bits output by the preset encoder should be equal to the target number of bits.

For example, when the network device configures a total of 256 transmission resources for feedback information, numbered 0 to 255, a length of the meta bit corresponding to the uplink data transmitted by the UE is 16 bits, the 16 bits are input to the encoder, and the encoder outputs 8 bits. The encoder is implemented as follows: performing an XOR operation on a first input bit and a second input bit to obtain a first output bit, performing an XOR operation on a third input bit and a fourth input bit to obtain a second output bit, ..., performing an XOR operation on a fifteenth input bit and a sixteenth input bit to obtain an eighth output bit. An index corresponding to the 8-bit output result is one of 0 to 255, which is the corresponding identifier of the transmission resource.

It is to be noted here that since the network device needs to use transmission resources to transmit feedback information, the network device side should use the same implementation mode as the UE side to obtain the target identifier, so that the two have the same understanding of resources.

It is to be noted that the network device can determine the transmission resources only if it detects the meta bits transmitted by the UE. If the network device does not detect the meta bits transmitted by the UE, the network device will not perform the subsequent procedure of determining the transmission resources.

In some embodiments, after determining the transmission resource for transmitting the feedback information, the network device needs to transmit the feedback information of the uplink data to the UE through the transmission resource.

It is to be noted here that, since the network device side may receive uplink data from multiple UEs at the same time, it is necessary to determine resources for transmitting feedback information corresponding to the uplink data of the multiple UEs respectively. In one case, a transmission resource finally determined by the network device correspond to at least two UEs, that is, the network device needs to transmit feedback information to at least two UEs on the transmission resource at the same time. In some embodiments, in this case, one specific implementation of transmitting the feedback information of the uplink data to the UE through the transmission resource, includes at least one of the following:

A11: if it is determined that uplink data of at least one UE among the at least two UEs is not correctly received, transmitting feedback information of the uplink data to the at least two UEs through the transmission resource, where the feedback information is used to indicate that the network device has not correctly received the uplink data.

That is to say, in this case, as long as the uplink data of one UE is not received correctly, the network device needs to transmit a non-acknowledgement (NACK) to all UEs on the transmission resource, indicating that the network device has not received the uplink data correctly.

A12: if it is determined that the uplink data of at least one UE among the at least two UEs is correctly received, transmitting feedback information of the uplink data to the at least two UEs through the transmission resource, where the feedback information is used to indicate that the network device correctly receives the uplink data.

That is to say, in this case, as long as the uplink data of one UE is correctly received, the network device needs to transmit an acknowledgement (ACK) to all UEs on the transmission resource, indicating that the network device has correctly received the uplink data.

It is also to be noted that, in the above two cases, for each UE, if the network device correctly receives the uplink data of the UE, the network device does not need to schedule retransmission for the UE; if the network device does not correctly receive the uplink data of the UE, when the retransmission mode is configured, the network device can schedule retransmission for the UE, or, when the retransmission mode is not configured, the network device may not schedule retransmission for the UE. If the network device needs to schedule retransmission, it needs to transmit downlink control information to the UE, and the downlink control information is used to schedule the UE to retransmit the uplink data. In some embodiments, the downlink control information can be scrambled with the meta bit.

It is to be further explained that, after the UE detects the feedback information of the uplink data transmitted by the network device on the transmission resource, if the feedback information indicates that the network device has not correctly received the uplink data, the meta bit is used to detect the downlink control information transmitted by the network device. Based on a detection result of the downlink control information, the UE retransmits the uplink data at an appropriate position.

In some embodiments, the downlink control information is transmitted via a physical downlink control channel (PDCCH).

It is to be noted that in the related art, physical hybrid automatic repeat request indicator channel (PHICH) is used to feedback an acknowledgement (ACK) or a non-acknowledgement (NACK) for data transmitted in uplink data (e.g., PUSCH); and the UE needs to first perform a blind detection of PDCCH, and after failing to detect the PDCCH, continue to detect PHICH on specific resources. This PDCCH blind detection may cause serious UE energy waste. However, the implementation in the embodiment of the present disclosure directly determines the transmission resource for transmitting feedback information corresponding to the uplink data based on the meta bit, and then directly detects the feedback information on the transmission resource. Only when the feedback information indicates that the network device has not correctly received the uplink data, the PDCCH is detected, thereby canceling the procedure of blindly detecting the PDCCH before the feedback information, which can reduce the power consumption of the UE and achieve UE energy saving.

The following takes communication between a UE and a base station as an example to illustrate the specific implementation of the embodiment of the present disclosure.

Taking the case where a UE communicates with a base station, the UE transmits PUSCH, and the base station transmits feedback information through a PDFCH resource as an example, one specific implementation process of the embodiment of the present disclosure is as follows.

The base station side procedure includes:

Step 11: the base station transmits resource configuration information to the UE;

In some embodiments, the base station may transmit PDFCH common resource (pdfch-ResourceCommon) signaling via MIB or SIB to configure (or schedule) sufficient PDFCH resources for feedback information of uplink data.

Specifically, the pdfch-ResourceCommon signaling includes at least one of the following parameters:

$I_{Symb}^{PDFCH}$ which represents a starting symbol index of each PDFCH resource (startingSymbolIndex);

$N_{Symb}^{PDFCH}$ which represents the number of symbols occupied by each PDFCH resource (nrofSymbols);

$N_{Sq}^{PDFCH}$ which represents the number of orthogonal sequences in the time domain (nrofSquences) and is usually equal to $N_{Symb}^{PDFCH}$;

$N_{Occ}^{PDFCH}$ which represents the number of PDFCH occasions per slot in the time domain (nrofOccationPerSlot);

$N_{Slots}^{PDFCH}$ which represents the number of slots occupied by PDFCH resources (nrofSlots);

$I_{PRB}^{PDFCH}$ which represents an index of a starting PRB of PDFCH resource (startingPRB);

$N_{PRB}^{PDFCH}$ which represents the number of PRBs occupied by PDFCH resources (nrofPRBs);

$I_{CS}^{PDFCH}$ which represents a value of an initial cyclic shift on each PRB (startingCSPerPRB);

$N_{CS}^{PDFCH}$ which represents the number of cyclic shifts per PRB (nrofCSPerPRB).

By modulating I and Q signals separately, the maximum number of PDFCHs that can be accommodated in the time-frequency resources of each PRB and each slot is

$$N_{Total}^{PDFCH} = 2 \times N_{PRB}^{PDFCH} \times N_{CS}^{PDFCH} \times N_{Slots}^{PDFCH} \times N_{Occ}^{PDFCH} \times N_{Sq}^{PDFCH}$$ 个 PDFCH. That is, $N_{Total}^{PDFCH}$ represents a total number of PDFCH resources configured by the base station, $N_{Total}^{PDFCH}$ represents a total number of PDFCHs. Based on indexes of PDFCH resources, a final position of the PDFCH resource is determined by first performing I and Q ordering, followed by frequency domain ordering, and finally time domain ordering. For example, given

$$N_{PRB}^{PDFCH} = 6, N_{CS}^{PDFCH} = 12, N_{Slots}^{PDFCH} = 3, N_{Occ}^{PDFCH} = 3, N_{Sq}^{PDFCH} = 4$$ , PDFCH resource with index=0 is slot=0, Occ=0, OFDM symbols from from $I_{Symb}^{PDFCH}$ to $I_{Symb}^{PDFCH} + 3$ , sequence=0, PRB=$I_{PRB}^{PDFCH}$ , CS=0, I-path;

PDFCH resource with index=577 is slot=0, Occ=1, OFDM symbols from $I_{Symb}^{PDFCH} + 4$ to $I_{Symb}^{PDFCH} + 7$ , sequence=0,

PRB=$I_{PRB}^{PDFCH}$ , CS=0, Q-path.

Step 12: the base station determines, according to the received meta bit transmitted by the UE, a first resource for transmitting feedback information of uplink data of the UE.

First, the base station determines an index of the PDFCH resource through formula 1:

$$n_{Index}^{PDFCH} = (CRC\ bits)\ mod\ N_{Total}^{PDFCH}$$ , where $n_{Index}^{PDFCH}$ represents the index of PDFCH resource, and CRC bits represent the meta bit.

Further, based on the index, the base station determines a location of the PDFCH resource for transmitting feedback information of the UE, where the location includes slot=s, Occ=c, starting symbol i, sequence=j, PRB=p, CS=q, and IQ=k.

For example, according to index=577, it can be concluded that s=0, c=1, j=0, p=$I_{PRB}^{PDFCH}$ , q=0, k=1.

It is to be noted that a special scenario may arise where CRC bits of multiple UEs are calculated to obtain the same $n_{Index}^{PDFCH}$ , the feedback information corresponding to some UEs is ACK, and the feedback information corresponding to some UEs is NACK. In one case, the base station transmits NACK at this resource position, or, in another case, the base station transmits ACK at this resource position. Further, when the retransmission mode is configured, the base station performs retransmission through PDCCH for the UE whose feedback information is NACK, and does not need to perform retransmission for the UE whose feedback information is ACK. It is to be noted here that because the number of PDFCH channels is large (such as 5184) and the probability that the feedback information of each UE is NACK is less than 0.1, the probability of this special case occurring is small.

Step 13: the base station generates a PDFCH signal for a target UE.

The specific process includes:

Step 1301: generating an ACK bit (=0) or a NACK bit (=1) according to a PUSCH detection result of the UE;
Step 1302: performing binary phase shift keying (BPSK) modulation;
Step 1303: according to IQ=k, select I-path or Q-path;
Step 1304: according to CS=q, performing cyclic shift q on a base sequence to obtain a cyclic shift (CS) sequence;
Step 1305: according to PRB=p, mapping the CS sequence to 12 resource elements (RE) of PRB p;
Step 1306: according to sequence=j, spreading data of 12 REs on PRB p respectively;
Step 1307: mapping the spread sequence to symbols from symbol i to symbol i+sequence length according to the starting symbol i;

Step 1308: according to slot=s, Occ=c, mapping the above signal to the c-th occasion of the s-th slot;

Step 1309: if feedback information of multiple UEs needs to be transmitted on the same PDFCH resource, multiplexing signals of the multiple UEs together;

Step 1310: scrambling the multiplexed signal with a unified DL HARQ-RNTI;

Step 1311: transmitting the scrambled signal.

It is to be noted that the CS sequence is generated by cyclic shift of the base sequence; where the base sequence is $\bar{r}_u(n) = e^{j\varphi_u(n)\pi/4}$, $0 \leq u \leq 29$, $0 \leq n \leq 11$.

$\varphi_u(n)$ represents an original sequence for generating the base sequence, and its definition is shown in Table 1; j represents the complex form of the square root of -1.

Table 1 Original sequence

| u | $\varphi(1), \ldots\ldots\varphi(11)$ | | | | | | | | | | |
|---|----|----|----|----|----|----|----|----|----|----|----|
| 0 | -3 | 1 | -3 | -3 | -3 | 3 | -3 | -1 | 1 | 1 | 1 | -3 |
| 1 | -3 | 3 | 1 | -3 | 1 | 3 | -1 | -1 | 1 | 3 | 3 | 3 |
| 2 | -3 | 3 | 3 | 1 | -3 | 3 | -1 | 1 | 3 | -3 | 3 | -3 |
| 3 | -3 | -3 | -1 | 3 | 3 | 3 | -3 | 3 | -3 | 1 | -1 | -3 |
| 4 | -3 | -1 | -1 | 1 | 3 | 1 | 1 | -1 | 1 | -1 | -3 | 1 |
| 5 | -3 | -3 | 3 | 1 | -3 | -3 | -3 | -1 | 3 | -1 | 1 | 3 |
| 6 | 1 | -1 | 3 | -1 | -1 | -1 | -3 | -1 | 1 | 1 | 1 | -3 |
| 7 | -1 | -3 | 3 | -1 | -3 | -3 | -3 | -1 | 1 | -1 | 1 | -3 |
| 8 | -3 | -1 | 3 | 1 | -3 | -1 | -3 | 3 | 1 | 3 | 3 | 1 |
| 9 | -3 | -1 | -1 | -3 | -3 | -1 | -3 | 3 | 1 | 3 | -1 | -3 |
| 10 | -3 | 3 | -3 | 3 | 3 | -3 | -1 | -1 | 3 | 3 | 1 | -3 |
| 11 | -3 | -1 | -3 | -1 | -1 | -3 | 3 | 3 | -1 | -1 | 1 | -3 |
| 12 | -3 | -1 | 3 | -3 | -3 | -1 | -3 | 1 | -1 | -3 | 3 | 3 |
| 13 | -3 | 1 | -1 | -1 | 3 | 3 | -3 | -1 | -1 | -3 | -1 | -3 |
| 14 | 1 | 3 | -3 | 1 | 3 | 3 | 3 | 1 | -1 | 1 | -1 | 3 |
| 15 | -3 | 1 | 3 | -1 | -1 | -3 | -3 | -1 | -1 | 3 | 1 | -3 |
| 16 | -1 | -1 | -1 | -1 | 1 | -3 | -1 | 3 | 3 | -1 | -3 | 1 |
| 17 | -1 | 1 | 1 | -1 | 1 | 3 | 3 | -1 | -1 | -3 | 1 | -3 |
| 18 | -3 | 1 | 3 | 3 | -1 | -1 | -3 | 3 | 3 | -3 | 3 | -3 |
| 19 | -3 | -3 | 3 | -3 | -1 | 3 | 3 | 3 | -1 | -3 | 1 | -3 |
| 20 | 3 | 1 | 3 | 1 | 3 | -3 | -1 | 1 | 3 | 1 | -1 | -3 |
| 21 | -3 | 3 | 1 | 3 | -3 | 1 | 1 | 1 | 1 | 3 | -3 | 3 |
| 22 | -3 | 3 | 3 | 3 | -1 | -3 | -3 | -1 | -3 | 1 | 3 | -3 |
| 23 | 3 | -1 | -3 | 3 | -3 | -1 | 3 | 3 | 3 | -3 | -1 | -3 |
| 24 | -3 | -1 | 1 | -3 | 1 | 3 | 3 | 3 | -1 | -3 | 3 | 3 |
| 25 | -3 | 3 | 1 | -1 | 3 | 3 | -3 | 1 | -1 | 1 | -1 | 1 |
| 26 | -1 | 1 | 3 | -3 | 1 | -1 | 1 | -1 | -1 | -3 | 1 | -1 |
| 27 | -3 | -3 | 3 | 3 | 3 | -3 | -1 | 1 | -3 | 3 | 1 | -3 |
| 28 | 1 | -1 | 3 | 1 | 1 | -1 | -1 | -1 | 1 | 3 | -3 | 1 |
| 29 | -3 | 3 | -3 | 3 | -3 | -3 | 3 | -1 | -1 | 1 | 3 | -3 |

The parameter u represents an index of the base sequence,

$$u = \left(N_{ID}^{cell} + s \cdot N_{Occ}^{PDFCH} \cdot N_{PRB}^{PDFCH} + c \cdot N_{PRB}^{PDFCH} + p\right) mod\ 30\ ;$$

where $s$ represents a slot index, $c$ represents a PDFCH channel occasion index within the time sequence, and $p$ represents the PRB label index.

The cyclic shift sequence is:

$$r_u^{\alpha_q}(n) = e^{j\alpha_q n}\bar{r}_u(n), 0 \le u \le 29, 0 \le n \le N_{SC}^{RB} - 1$$

where $N_{SC}^{RB}$ represents the number of subcarriers in each resource block, $\alpha_q$ represents a cyclic shift coefficient,

$\alpha_q = \frac{2\pi q}{N_{SC}^{RB}},\quad 0 \le q \le N_{SC}^{RB} - 1$ .

The time domain orthogonal sequence is: $w_i(m) = e^{\frac{j2\pi\varphi_i(m)}{N_{Sq}^{PDFCH}}}, 0 \le m \le N_{Sq}^{PDFCH} - 1$;

where $\varphi_i(m)$ represents the base sequence of the time domain orthogonal sequence, which is shown in Table 2, the base sequence for $N_{Sq}^{PDFCH} = 8$ can be obtained according to a rule.

Table 2 Base sequence of time domain orthogonal sequence

| | $\varphi$ | | | | | | |
|---|---|---|---|---|---|---|---|
| | i=0 | i=1 | i=2 | i=3 | i=4 | i=5 | i=6 |
| 1 | [0] | | | | | | |
| 2 | [0 0] | [0 1] | | | | | |
| 3 | [0 0 0] | [0 1 2] | [0 2 1] | | | | |
| 4 | [0 0 0 0] | [0 2 0 2] | [0 0 2 2] | [0 2 2 0] | | | |
| 5 | [0 0 0 0 0] | [0 1 2 3 4] | [0 2 4 1 3] | [0 3 1 4 2] | [0 4 3 2 1] | | |
| 6 | [0 0 0 0 0 0] | [0 1 2 3 4 5] | [0 2 4 0 2 4] | [0 3 0 3 0 3] | [0 4 2 0 4 2] | [0 5 4 3 2 1] | |
| 7 | [0 0 0 0 0 0 0] | [0 1 2 3 4 5 6] | [0 2 4 6 1 3 5] | [0 3 6 2 5 1 4] | [0 4 1 5 2 6 3] | [0 5 3 1 6 4 2] | [0 6 5 4 3 2 1] |

$$i = \left(N_{ID}^{cell} + s \cdot N_{Occ}^{PDFCH} \cdot N_{Sq}^{PDFCH} + c \cdot N_{Sq}^{PDFCH} + j\right) mod\ N_{Sq}^{PDFCH}.$$

On the PDFCH channel resource (with slot=s, Occ=c, sequence=j, PRB=p, CS=q, IQ=k) of a certain UE, it is actually a resource block consisting of $N_{SC}^{RB} \cdot N_{Sq}^{PDFCH}$ resource elements (REs) used for transmitting PDFCH signal. The PDFCH signal transmitted on the m-th symbol and the n-th subcarrier within this resource block is expressed with the following formula:

$z = w_i(m) \cdot r_u^{\alpha_q}(n) \cdot d_k$ where z represents a PDFCH signal transmitted on the n-th subcarrier of the p-th resource block in the m-th symbol, $d_k$ represents data on IQ, k=0 represents data d0 on the I path, and k=1 represents data d1 on the Q path.

The UE-side process includes:

Step 14: the UE receives resource configuration information transmitted by the base station.

In some embodiments, the UE obtains PDFCH resources configured (or scheduled) by the base station through pdfch-ResourceCommon signaling transmitted by MIB or SIB.

Step 15: the UE determines a first resource for transmitting feedback information of uplink data according to meta bit;

First, determining an index of a PDFCH resource by using the formula $n_{Index}^{PDFCH} = (CRC\ bits)\ mod\ N_{Total}^{PDFCH}$ ;

Further, based on the index, determining a location of the PDFCH resource, including slot=s, Occ=c, PRB=p, sequence=j, CS=q, and IQ=k.

Step 16: the UE uses squence=j and CS=q to perform a correlation operation with the received signal at the above resource position to obtain a feedback information bit d.

In summary, the embodiments of the present disclosure can achieve the following beneficial effects:

Solving the problem of UE energy waste: in the case of massive access, the base station transmits HARQ ACK/NACK information to the detected UE, solving the energy waste problem caused by blind detection of PDCCH on the UE side. The UE first detects at its own HARQ ACK/NACK information resource location; if it is NACK and PUSCH retransmission is required, the UE will continue to blindly detect PDCCH and perform the prescribed subsequent processing flow, thereby saving terminal power consumption;

Solving the UE ID problem in non-coordinated non-orthogonal technologies: for non-coordinated non-orthogonal multiple access technologies, there is no physical layer UE ID information between the base station and the UE in addition to coordination information such as MIB and SIB; and the value obtained by processing the meta bits corresponding to the transmitted PUSCH, i.e., the index, is used as a temporary UE ID to determine resources for transmitting feedback information, which can ensure accurate transmission of feedback information for PUSCH.

The technical solution of the embodiment of the present disclosure may be applied to various systems, especially a 5G system. For example, applicable systems may be Global System of Mobile communication (GSM) system, Code Division Multiple Access (CDMA) system, Wideband Code Division Multiple Access (WCDMA) system, General Packet Radio Service (GPRS) system, Long Term Evolution (LTE) system, LTE frequency division duplex (FDD), LTE time division duplex (TDD) system, long term evolution advanced (LTE-A) system, universal mobile telecommunication system (UMTS), worldwide interoperability for microwave access (WiMAX) system, or 5th-Generation (5G) New Radio (NR) system. Each of these systems includes a terminal device and a network device. Each system further includes a core network part, e.g., an Evolved Packet System (EPS) or 5G system (5GS/5GC).

The terminal involved in the embodiments of the present disclosure may be referred to as a terminal device, which may be a device for providing voice data and/or any other service data to a user, e.g., a handheld device having a wireless connection function, or any other processing device capable of being connected to a wireless modem. In different systems, the terminal device may have different names. For example, in a 5G system, the terminal device is called as user equipment (UE). A wireless terminal device communicates with one or more Core Networks (CNs) via a Radio Access Network (RAN). The wireless terminal device may be a mobile terminal, e.g., a mobile phone (or cellular phone), or a computer having the mobile terminal device, e.g., a portable, pocket-sized, handheld, built-in or vehicle-mounted mobile device, which are capable of exchanging voice and/or data with the RAN. For example, the wireless terminal device may be a Personal Communication Service (PCS) telephone, a cordless telephone, a Session Initiation Protocol (SIP) phone, a Wireless Local Loop (WLL) station, or a Personal Digital Assistant (PDA). In addition, the wireless terminal device may also be called as system, subscriber unit, subscriber station, mobile station, mobile, remote station, access point, remote terminal, access terminal, user terminal, user agent or user device, which will not be particularly defined herein.

The network device involved in the embodiment of the present disclosure may be a base station which includes a plurality of cells providing services for the UE. Depending on different application scenarios, the base station is called as an access point, a device in an access network in communication with the wireless terminal device through one or more sectors on an air interface, or any other name. The network device is used to exchange a received air frame with an Internet Protocol (IP) packet, and it serves as a router between the wireless terminal device and the other part of the access network. The other part of the access network includes an IP communication network. The network device may further coordinate attribute management on the air interface. For example, the network device involved in the embodiments of the present disclosure is a Base Transceiver Station (BTS) in the Global System for Mobile communications (GSM) or Code Division Multiple Access (CDMA) system, a NodeB in the Wide-band Code Division Multiple Access (WCDMA) system, an evolutional Node B (eNB, or e-NodeB) in the LTE system, a 5G base station (gNB) in 5G network architecture (next generation system), a Home evolved Node B (HeNB), a relay node, a femto, or a pico, which will not be particularly defined herein. In some network structures, the network device includes a Centralized Unit (CU) and a Distributed Unit (DU), which may be geographically separated from each other.

Each of the network device and the terminal can use one or more antennas for multi input multi output (MIMO) transmission between the network device and the terminal. The MIMO transmission may be single user MIMO (SU-MIMO), or multiple user MIMO (MU-MIMO). According to forms and numbers of antenna combinations, MIMO transmission may be two dimensional-MIMO (2D-MIMO), three dimensional-MIMO (3D-MIMO), full dimensional-MIMO (FD-MIMO), or massive-MIMO, or diversity transmission, precoding transmission, or beamforming transmission.

Corresponding to implementation of the UE, as shown in FIG. 3, one embodiment of the present disclosure provides an information transmission method, which is applied to a network device, including:

Step S301: obtaining a transmission resource according to a meta bit transmitted by the UE.

It is to be noted that the transmission resource refers to a resource used to transmit feedback information corresponding to uplink data transmitted by the UE.

In some embodiments, the meta bit is a bit stream generated based on encoding the uplink data; for example, one encoding mode is CRC encoding, and the uplink data is processed by a CRC encoder, resulting in a 16-bit stream; another encoding mode is to take the first X bits of the uplink data, that is, the uplink data is processed by the CRC encoder, resulting in an X-bit bit stream.

In some embodiments, the meta bit may be used to indicate an encoding mode interleaving mode, scrambling mode, etc. of the uplink data.

It is to be noted here that the meta bit corresponding to the uplink data of the user equipment (UE) can be used to distinguish different UEs. Based on the meta bit, the transmission resource corresponding to one UE can be determined. For example, an index of a specific transmission resource can be determined through the meta bit, and the specific transmission resource can be found based on the index.

Step S302: transmitting feedback information of the uplink data to the UE via the transmission resource.

It is to be noted that in the embodiment of the present disclosure, the transmission resource is determined by utilizing the meta bit, and the meta bit is corresponding to the UE and can determine a unique transmission resource for the UE to transmit feedback information, so that the network device can accurately determine the resource for transmitting feedback information of the uplink data, thereby ensuring accurate transmission of feedback information of the uplink data in non-coordinated non-orthogonal multiple access.

In some embodiments, the uplink data mentioned in the embodiments of the present disclosure refers to data transmitted by the UE to the network device, which may be data transmitted via PUSCH.

In some embodiments, in one implementation, before obtaining a transmission resource according to a meta bit transmitted by the UE, the method further includes:
transmitting resource configuration information to the UE; where the resource configuration information is used to indicate at least one transmission resource and an identifier corresponding to each transmission resource.

The resource configuration information includes at least one of the following: a quality of slots, a quantity of resources in each slot, time domain symbol resource position, frequency domain resource position, and an orthogonal sequence set.

It is to be noted that the specific description and usage of the resource configuration information can refer to the description of the UE side embodiment, which will not be repeated here.

In some embodiments, the transmission resource may be a physical downlink feedback channel (PDFCH) resource.

In some embodiments, in one implementation, the obtaining a transmission resource according to a meta bit transmitted by the UE, includes:

determining a target identifier according to the meta bit;
determining a resource corresponding to the target identifier as the transmission resource.

In some embodiments, in one implementation, the determining a target identifier according to the meta bit, includes:

using the meta bit to perform a modulo operation on the total number of transmission resources configured by the network device to obtain a target identifier; or,
inputting the meta bit into a preset encoder, and determining an output result as a target identifier.

It is to be noted that the specific implementation of the network device determining the target identifier based on the meta-bit can be found in the description of the UE side embodiment and will not be repeated here; it is to be noted here that in order to keep the target identifiers determined by the two the same, the UE side determines the target identifier in the same way as the network device side.

In some embodiments, in one implementation, the transmitting feedback information of the uplink data to the UE via the transmission resource, includes at least one of the following:

in case where the transmission resource corresponds to at least two UEs, if it is determined that uplink data of at least one UE among the at least two UEs is not correctly received, transmitting feedback information of the uplink data to the at least two UEs through the transmission resource, where the feedback information is used to indicate that the network device has not correctly received the uplink data;
in case where the transmission resource corresponds to at least two UEs, if it is determined that the uplink data of at least one UE among the at least two UEs is correctly received, transmitting feedback information of the uplink data to the at least two UEs through the transmission resource, where the feedback information is used to indicate that the network device correctly receives the uplink data.

It is to be noted that the specific implementation of the network device transmitting the feedback information of the uplink data to the UE through the transmission resource can be found in the description of the UE side embodiment, which will not be repeated here.

In some embodiments, in one implementation, after transmitting feedback information of the uplink data to the UE via the transmission resource, the method further includes:

if it is determined that the uplink data transmitted by the UE is not correctly received, transmitting downlink control information to the UE, where the downlink control information is used to schedule the UE to retransmit the uplink data.

It is to be noted that, if the network device does not correctly receive the uplink data transmitted by the UE, when the retransmission mode is configured, the network device can schedule retransmission for the UE, or, when the retransmission mode is not configured, the network device may not schedule retransmission for the UE. If the network device needs to schedule retransmission, it needs to transmit downlink control information to the UE, and the downlink control information is used to schedule the UE to retransmit the uplink data. In some embodiments, the downlink control information can be scrambled with the meta bit.

In some embodiments, the downlink control information is transmitted via a physical downlink control channel (PDCCH).

It is to be noted that all descriptions about the network device in the UE side embodiment are applicable to the embodiment of the information transmission method. The network device side embodiment can also achieve the same technical effect as the UE side, and will not be repeated here.

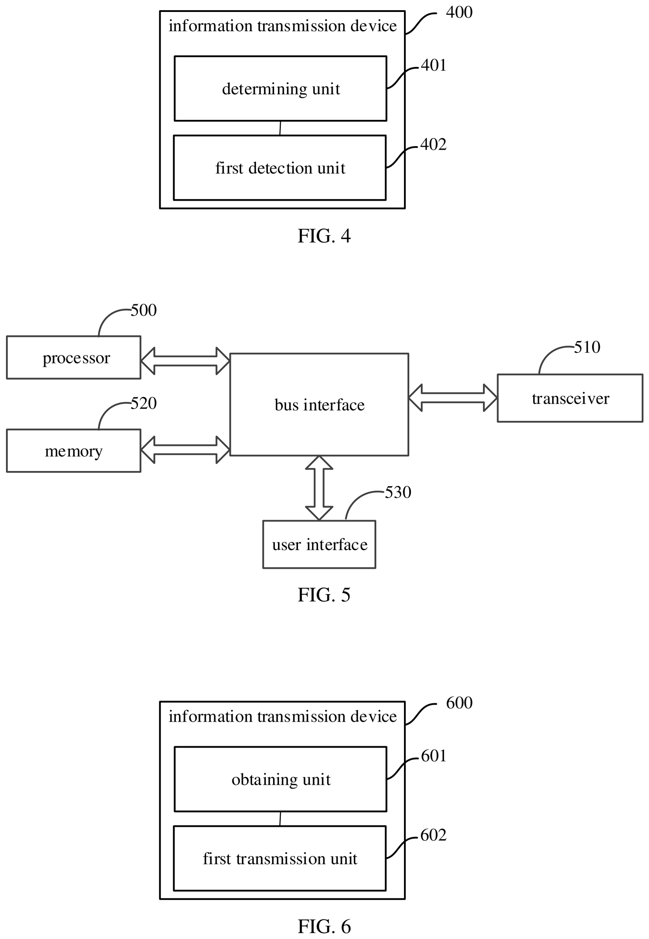

As shown in FIG. 4, one embodiment of the present disclosure provides an information transmission device 400, which is applied to a UE and includes:

a determining unit 401 used to determine a transmission resource according to a meta bit corresponding to uplink data; where the meta bit is a bit stream generated based on encoding the uplink data;
a first detection unit 402 used to detect the feedback information of the uplink data transmitted by a network device on the transmission resource.

In some embodiments, before the determining unit 401 determines the transmission resource according to the meta bit corresponding to the uplink data, the device further includes:

a receiving unit used to receive resource configuration information transmitted by the network device; where the resource configuration information is used to indicate at least one transmission resource and an identifier corresponding to each transmission resource;
where the resource configuration information includes at least one of the following: a quality of slots, a quantity of resources in each slot, time domain symbol resource position, frequency domain resource position, and an orthogonal sequence set.

In some embodiments, the determining unit 401 is used to:

determine a target identifier according to the meta bit corresponding to the uplink data;
determine a resource corresponding to the target identifier as the transmission resource.

In some embodiments, the determining a target identifier according to the meta bit corresponding to the uplink data, includes one of the following implementations:

using the meta bit to perform a modulo operation on the total number of transmission resources configured by the network device to obtain a target identifier; or
inputting the meta bit into a preset encoder, and determining an output result as a target identifier.

In some embodiments, after the first detection unit 402 detects the feedback information of the uplink data transmitted by the network device on the transmission resource, the device further includes:

a second detection unit used to, if the feedback information indicates that the network device has not correctly received the uplink data, detect downlink control information transmitted by the network device by using the meta bit, where the downlink control information is used to schedule the UE to retransmit the uplink data.

In some embodiments, the downlink control information is scrambled with the meta bit.

It is to be noted that the device embodiment is a device that corresponds to the above-mentioned method embodiment in a one-to-one manner. All implementations in the above method embodiment are applicable to the device embodiment and can achieve the same technical effect.

It is to be noted that division of units in the embodiment of the present disclosure is exemplary, and is only a logical function division, and there may be another division manner in actual implementation. In addition, various functional units in each embodiment of the present application may be integrated into one processing unit, each unit may exist separately physically, or two or more units may be integrated into one unit. The foregoing integrated units may be implemented in the form of hardware or in the form of software functional units.

If the integrated units are realized in the form of software function units and sold or used as independent products, they may be stored in a processor-readable storage medium. Based on this understanding, the essence of the technical solution of the present disclosure or the part that contributes to the related art or the part of the technical solution may be embodied in the form of a software product. The computer software product is stored in a storage medium, includes several instructions which enables a computer device (which may be a personal computer, a server, or a network device, etc.) or a processor to execute all or part of the steps of the methods described in various embodiments of the present disclosure. The storage medium includes various media capable of storing program codes such as U disk, mobile hard disk, ROM, RAM, magnetic disk or optical disk.

As shown in FIG. 5, one embodiment of the present disclosure further provides a user equipment, including a processor 500, a transceiver 510, a memory 520, and a program stored in the memory 520 and executable on the processor 500. The transceiver 510 is coupled to the processor 500 and the memory 520 via a bus interface. The processor 500 is used to read the program in the memory and execute the following process:

determining a transmission resource according to a meta bit corresponding to uplink data; where the meta bit is a bit stream generated based on encoding the uplink data;
detecting the feedback information of the uplink data transmitted by a network device on the transmission resource.

The transceiver 510 is used to receive and transmit data under the control of the processor 500.

In FIG. 15, a bus architecture may include any number of interconnected bus and bridge. Specifically, various circuits of one or more processors, which are represented by the processor 500, and one or more memories, which are represented by the memory 520, are linked together. The bus architecture may link various other circuits, such as a peripheral device, voltage regulator and a power management circuit together. These features are well known in this field; therefore, the present disclosure does not make further description on these features. The bus interface provides an interface. The transceiver 510 may be multiple elements, including a transmitter and a receiver and provide units, which communicate with other devices on the transmission medium. The transmission medium includes radio channels, wired channels, optical cables, etc. For different UEs, a user interface 530 may be an interface that can be connected to external or internal devices. The connected devices include but are not limited to a small keyboard, a display, a speaker, a microphone, a joystick, etc.

The processor 500 is responsible for managing the bus architecture and the normal processing. The memory 520 may be used to store data used by the processor 500 for performing operations.

In some embodiments, the processor 500 may be a central processing unit (CPU), an application specific integrated circuit (ASIC), a field-programmable gate array (FPGA) or a complex programmable logic device (CPLD). The processor may also adopt multi-core architecture.

The processor calls the computer program stored in the memory to execute any method provided in the embodiment of the present disclosure according to obtained executable instructions. The processor and the memory may also be arranged physically separately.

In some embodiments, the processor is used to read the computer program in the memory and further perform the following operations:

receiving resource configuration information transmitted by the network device; where the resource configuration information is used to indicate at least one transmission resource and an identifier corresponding to each transmission resource;
where the resource configuration information includes at least one of the following: a quality of slots, a quantity of resources in each slot, time domain symbol resource position, frequency domain resource position, and an orthogonal sequence set.

In some embodiments, the processor is used to read the computer program in the memory and further perform the following operations:

determining a target identifier according to the meta bit corresponding to the uplink data;
determining a resource corresponding to the target identifier as the transmission resource.

In some embodiments, the processor is used to read the computer program in the memory and further perform the following operations:

using the meta bit to perform a modulo operation on the total number of transmission resources configured by the network device to obtain a target identifier; or

inputting the meta bit into a preset encoder, and determining an output result as a target identifier.

In some embodiments, the processor is used to read the computer program in the memory and further perform the following operations:

if the feedback information indicates that the network device has not correctly received the uplink data, detecting downlink control information transmitted by the network device by using the meta bit, where the downlink control information is used to schedule the UE to retransmit the uplink data.

In some embodiments, the downlink control information is scrambled with the meta bit.

At least one embodiment of the present disclosure further provides a user equipment, including a memory, a processor, and a computer program stored in the memory and executable on the processor. When the processor executes the program, each process in the information transmission method embodiment applied to the UE is implemented, and the same technical effect can be achieved, which will not be described here to avoid repetition.

At least one embodiment of the present disclosure further provides a computer-readable storage medium, including a computer program stored thereon. When the program is executed by a processor, each process in the information transmission method embodiment applied to a UE as described above is implemented, and the same technical effect can be achieved, which will not be described here to avoid repetition. The computer-readable storage medium is, for example, a read-only memory (ROM), a random access memory (RAM), a magnetic disk or an optical disk.

As shown in FIG. 6, one embodiment of the present disclosure provides an information transmission device 600, which is applied to a network device and includes:

an obtaining unit 601 used to obtain a transmission resource according to a meta bit transmitted by the UE; where the meta bit is a bit stream generated based on encoding the uplink data;

a first transmission unit 602 used to transmit feedback information of the uplink data to the UE via the transmission resource.

In some embodiments, before the obtaining unit 601 obtains the transmission resource according to a meta bit transmitted by the UE, the device further includes:

a second transmission unit used to transmit resource configuration information to the UE; where the resource configuration information is used to indicate at least one transmission resource and an identifier corresponding to each transmission resource.

The resource configuration information includes at least one of the following: a quality of slots, a quantity of resources in each slot, time domain symbol resource position, frequency domain resource position, and an orthogonal sequence set.

In some embodiments, the obtaining unit 601 is used to:

determine a target identifier according to the meta bit;

determine a resource corresponding to the target identifier as the transmission resource.

In some embodiments, in one implementation, the determine a target identifier according to the meta bit, includes:

using the meta bit to perform a modulo operation on the total number of transmission resources configured by the network device to obtain a target identifier; or,

inputting the meta bit into a preset encoder, and determining an output result as a target identifier.

In some embodiments, the first transmission unit 602 is used to implement at least one of the following:

in case where the transmission resource corresponds to at least two UEs, if it is determined that uplink data of at least one UE among the at least two UEs is not correctly received, transmitting feedback information of the uplink data to the at least two UEs through the transmission resource, where the feedback information is used to indicate that the network device has not correctly received the uplink data;

in case where the transmission resource corresponds to at least two UEs, if it is determined that the uplink data of at least one UE among the at least two UEs is correctly received, transmitting feedback information of the uplink data to the at least two UEs through the transmission resource, where the feedback information is used to indicate that the network device correctly receives the uplink data.

In some embodiments, after the first transmission unit 602 transmits the feedback information of the uplink data to the UE through the transmission resource, the device further includes:

a third transmission unit used to, if it is determined that the uplink data transmitted by the UE is not correctly received, transmit downlink control information to the UE, where the downlink control information is used to schedule the UE to retransmit the uplink data.

In some embodiments, the downlink control information is scrambled with the meta bit.

It is to be noted that the device embodiment is a device that corresponds to the above-mentioned method embodiment in a one-to-one manner. All implementations in the above method embodiment are applicable to the device embodiment and can achieve the same technical effect.

It is to be noted that division of units in the embodiment of the present disclosure is exemplary, and is only a logical function division, and there may be another division manner in actual implementation. In addition, various functional units in each embodiment of the present application may be integrated into one processing unit, each unit may exist separately physically, or two or more units may be integrated into one unit. The foregoing integrated units may be implemented in the form of hardware or in the form of software functional units.

If the integrated units are realized in the form of software function units and sold or used as independent products, they may be stored in a processor-readable storage medium. Based on this understanding, the essence of the technical solution of the present disclosure or the part that contributes to the related art or the part of the technical solution may be embodied in the form of a software product. The computer software product is stored in a storage medium, includes several instructions which enables a computer device (which may be a personal computer, a server, or a network device, etc.) or a processor to execute all or part of the steps of the methods described in various embodiments of the present disclosure. The storage medium includes various media capable of storing program codes such as U disk, mobile hard disk, ROM, RAM, magnetic disk or optical disk.

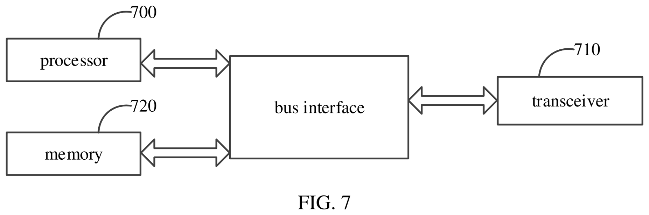

As shown in FIG. 7, one embodiment of the present disclosure further provides a network device, including a processor 700, a transceiver 710, a memory 720, and a program stored in the memory 720 and executable on the processor 700. The transceiver 710 is coupled to the processor 700 and the memory 720 through a bus interface. The processor 700 is used to read the program in the memory and execute the following process:

obtaining a transmission resource according to a meta bit transmitted by the UE; where the meta bit is a bit stream generated based on encoding the uplink data;
transmitting feedback information of the uplink data to the UE via the transmission resource.

The transceiver 710 is used to receive and transmit data under the control of the processor 700.

In FIG. 7, a bus architecture may include any number of interconnected bus and bridge. Specifically, various circuits of one or more processors, which are represented by the processor 700, and one or more memories, which are represented by the memory 720, are linked together. The bus architecture may link various other circuits, such as a peripheral device, voltage regulator and a power management circuit together. These features are well known in this field; therefore, the present disclosure does not make further description on these features. The bus interface provides an interface. The transceiver 710 may be multiple elements, including a transmitter and a receiver and provide units, which communicate with other devices on the transmission medium. The transmission medium includes radio channels, wired channels, optical cables, etc.

The processor 700 is responsible for managing the bus architecture and the normal processing. The memory 720 may be used to store data used by the processor 700 for performing operations.

In some embodiments, the processor 700 may be a central processing unit (CPU), an application specific integrated circuit (ASIC), a field-programmable gate array (FPGA) or a complex programmable logic device (CPLD). The processor may also adopt multi-core architecture.

The processor calls the computer program stored in the memory to execute any method provided in the embodiment of the present disclosure according to obtained executable instructions. The processor and the memory may also be arranged physically separately.

In some embodiments, the processor is used to read the computer program in the memory and further perform the following operations:

transmitting resource configuration information to the UE; where the resource configuration information is used to indicate at least one transmission resource and an identifier corresponding to each transmission resource.

The resource configuration information includes at least one of the following: a quality of slots, a quantity of resources in each slot, time domain symbol resource position, frequency domain resource position, and an orthogonal sequence set.

In some embodiments, the processor is used to read the computer program in the memory and further perform the following operations:

determining a target identifier according to the meta bit;

determining a resource corresponding to the target identifier as the transmission resource.

In some embodiments, the processor is used to read the computer program in the memory and further perform the following operations:

using the meta bit to perform a modulo operation on the total number of transmission resources configured by the network device to obtain a target identifier; or,
inputting the meta bit into a preset encoder, and determining an output result as a target identifier.

In some embodiments, the processor is used to read the computer program in the memory and further perform the following operations:

in case where the transmission resource corresponds to at least two UEs, if it is determined that uplink data of at least one UE among the at least two UEs is not correctly received, transmitting feedback information of the uplink data to the at least two UEs through the transmission resource, where the feedback information is used to indicate that the network device has not correctly received the uplink data;
in case where the transmission resource corresponds to at least two UEs, if it is determined that the uplink data of at least one UE among the at least two UEs is correctly received, transmitting feedback information of the uplink data to the at least two UEs through the transmission resource, where the feedback information is used to indicate that the network device correctly receives the uplink data.

In some embodiments, the processor is used to read the computer program in the memory and further perform the following operations:
if it is determined that the uplink data transmitted by the UE is not correctly received, transmitting downlink control information to the UE, where the downlink control information is used to schedule the UE to retransmit the uplink data.
In some embodiments, the downlink control information is scrambled with the meta bit.
It is to be noted here that the above network device provided in the embodiment of the present disclosure can implement all the method steps implemented in the above method embodiment, and can achieve the same technical effect. The parts and beneficial effects of this embodiment that are the same as the method embodiment will not be described in detail here.
One embodiment of the present disclosure further provides a computer-readable storage medium, which stores a computer program. The computer program is used to cause a processor to execute the above information transmission method on network device side. The processor-readable storage medium can be any available medium or data storage device that can be accessed by the processor, including but not limited to magnetic storage (such as floppy disks, hard disks, magnetic tapes, magneto-optical disks (MO), etc.), optical storage (such as compact disks (CD), digital video disks (DVD), Blu-ray Discs (BD), high-definition versatile disks (HVD), etc.), and semiconductor memory (such as read-only memory (ROM), erasable programmable read-only memory (EPROM), electrically erasable programmable read-only memory (EEPROM), non-volatile memory (NAND FLASH), solid-state disk (Solid State Disk or Solid State Drive, SSD)), etc.
A person skilled in the art should understand that the embodiments of the present application may be provided as methods, systems, or computer program products. Therefore, the present application may adopt the form of complete hardware embodiments, complete software embodiments, or embodiments combining software and hardware aspects. Moreover, the present application may adopt the form of a computer program product implemented on one or more computer available storage media (including but not limited to a disk storage, an optical storage, etc.) containing computer available program code.
The present application is described with reference to flowcharts and/or block diagrams of methods, devices (systems), and computer program products according to the embodiments of the present application. It should be understood that each process and/or block in the flowchart and/or block diagram, and the combination of processes and/or blocks in the flowchart and/or block diagram may be implemented by computer executable instructions. These computer executable instructions may be provided to a general-purpose computer, a special-purpose computer, an embedded processor, or a processor of other programmable data processing device to generate a machine, so that a device, which is configured to implement functions specified in one process or multiple processes in the flowchart and/or one block or multiple blocks in the block diagram, is generated through the instructions executed by the computer or the processor of other programmable data processing device.
These processor executable instructions may be stored in a processor readable memory that may guide a computer or other programmable data processing device to operate in a specific manner, so that the instructions stored in the processor readable memory generate a product including an instruction device. The instruction device implements the functions specified in one process or multiple processes in the flowchart and/or one block or multiple blocks in the block diagram.

These processor executable instructions may be loaded in a computer or other programmable data processing device, to enable a series of operation steps to be executed on the computer or other programmable equipment to realize computer-implemented processing, so that the instructions executed on the computer or other programmable device provide steps for implementing functions specified in a process or multiple processes in the flowchart and/or a block or multiple blocks in the block diagram.

It should be noted and understood that the division of the above modules is only a division of logical functions, which may be fully or partially integrated into a physical entity or physically separated in actual implementations. These modules may all be implemented in the form of software called by processing elements; or may all be implemented in the form of hardware; or, some modules may be implemented in the form of software called by processing elements, and some modules may be implemented in the form of hardware. For example, a determining module may be a separate processing element, or may be integrated into a certain chip of the above device, or, may be stored in the memory of the above device in the form of program code, and a certain processing element of the above device may call and execute the functions of the determining module. Other modules have similar implementations. In addition, all or part of these modules may be integrated together, and may be implemented independently. The processing element mentioned herein may be an integrated circuit with signal processing capability. In the implementation process, the various steps of the above method or the above various modules may be implemented by an integrated logic circuit in hardware form in elements of a processor or implemented by instructions in the form of software.

For example, the various modules, units, subunits or submodules may be one or more integrated circuits used to implement the above methods, such as one or more application specific integrated circuits (Application Specific Integrated Circuit, ASIC), or one or more microprocessors (Digital Signal Processor, DSP), or one or more field programmable gate arrays (Field Programmable Gate Array, FPGA), etc. As another example, when a module described above is implemented in the form of scheduling program codes by a processing element, the processing element may be a general-purpose processor, such as a central processing unit (Central Processing Unit, CPU) or other processors that may call program codes. As another example, these modules may be integrated together and implemented as a system-on-a-chip (system-on-a-chip, SOC).

Terms such as "first" and "second" in the specification and the claims of the present application are used to distinguish similar objects and are not necessarily used to describe a specific order or sequence. It should be understood that the terms used in this way may be interchanged under appropriate circumstances, so that the embodiments of the present application described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent to the process, method, product, or device. Moreover, the term "and/or" used in the specification and the claims indicates involving at least one of connected objects, for example, A and/or B and/or C means 7 situations, including: A alone, B alone, C alone, both A and B, both B and C, both A and C, and all of A, B and C. Similarly, the use of "at least one of A and B" in this specification and claims should be understood as "A alone, B alone, or both A and B".

Obviously, those skilled in the art can make various changes and modifications to the present application without departing from the spirit and scope of the present application. Thus, if these modifications and variations of the present application fall within the scope of the claims of the present application and equivalent technologies thereof, the present application also intends to include these modifications and variations.

**Claims**

1. An information transmission method, performed by a user equipment (UE), comprising:

   determining a transmission resource according to a meta bit corresponding to uplink data; wherein the meta bit is a bit stream generated based on encoding the uplink data; and
   detecting feedback information transmitted by a network device for the uplink data, on the transmission resource.

2. The method according to claim 1, wherein before determining the transmission resource according to the meta bit corresponding to the uplink data, the method further includes:

   receiving resource configuration information transmitted by the network device; wherein the resource configuration information is used to indicate at least one transmission resource and an identifier corresponding to each transmission resource;
   wherein the resource configuration information includes at least one of the following: a quality of slots, a quantity of resources in each slot, time domain symbol resource position, frequency domain resource position, and an orthogonal sequence set.

3. The method according to claim 1 or 2, wherein the determining a transmission resource according to a meta bit corresponding to uplink data, includes:

   determining a target identifier according to the meta bit corresponding to the uplink data; and
   determining a resource corresponding to the target identifier as the transmission resource.

4. The method according to claim 3, wherein the determining a target identifier according to the meta bit corresponding to the uplink data, includes:

   using the meta bit to perform a modulo operation on a total number of transmission resources configured by the network device to obtain the target identifier; or,
   inputting the meta bit into a preset encoder, and determining an output result as the target identifier.

5. The method according to claim 1 or 2, wherein after detecting the feedback information transmitted by the network device for the uplink data, on the transmission resource, the method further includes:
   if the feedback information indicates that the network device has not correctly received the uplink data, detecting downlink control information transmitted by the network device by using the meta bit, wherein the downlink control information is used to schedule the UE to retransmit the uplink data.

6. The method according to claim 5, wherein the downlink control information is scrambled with the meta bit.

7. An information transmission method, performed by a network device, comprising:

   obtaining a transmission resource according to a meta bit transmitted by the UE; wherein the meta bit is a bit stream generated based on encoding the uplink data; and
   transmitting feedback information of the uplink data to the UE via the transmission resource.

8. The method according to claim 7, wherein before obtaining the transmission resource according to the meta bit transmitted by the UE, the method further includes:

   transmitting resource configuration information to the UE; wherein the resource configuration information is used to indicate at least one transmission resource and an identifier corresponding to each transmission resource; wherein the resource configuration information includes at least one of the following: a quality of slots, a quantity of resources in each slot, time domain symbol resource position, frequency domain resource position, and an orthogonal sequence set.

9. The method according to claim 7 or 8, wherein the obtaining a transmission resource according to a meta bit transmitted by the UE, includes:

   determining a target identifier according to the meta bit; and
   determining a resource corresponding to the target identifier as the transmission resource.

10. The method according to claim 9, wherein the determining a target identifier according to the meta bit, includes:

   using the meta bit to perform a modulo operation on the total number of transmission resources configured by the network device to obtain the target identifier; or,
   inputting the meta bit into a preset encoder, and determining an output result as the target identifier.

11. The method according to claim 7 or 8, wherein the transmitting feedback information of the uplink data to the UE via the transmission resource, includes at least one of the following:

   in case where the transmission resource corresponds to at least two UEs, if it is determined that uplink data of at least one UE among the at least two UEs is not correctly received, transmitting feedback information of the uplink data to the at least two UEs through the transmission resource, wherein the feedback information is used to indicate that the network device has not correctly received the uplink data;

in case where the transmission resource corresponds to at least two UEs, if it is determined that the uplink data of at least one UE among the at least two UEs is correctly received, transmitting feedback information of the uplink data to the at least two UEs through the transmission resource, wherein the feedback information is used to indicate that the network device correctly receives the uplink data.

12. The method according to claim 7 or 8, wherein after transmitting the feedback information of the uplink data to the UE via the transmission resource, the method further includes:
if it is determined that the uplink data transmitted by the UE is not correctly received, transmitting downlink control information to the UE, wherein the downlink control information is used to schedule the UE to retransmit the uplink data.

13. The method according to claim 12, wherein the downlink control information is scrambled with the meta bit.

14. A user equipment (UE), comprising: a memory, a transceiver, and a processor;
wherein the memory is used to store a computer program; the transceiver is used to transmit and receive data under control of the processor; and the processor is used to read the computer program in the memory to perform the following operations:

determining a transmission resource according to a meta bit corresponding to uplink data; wherein the meta bit is a bit stream generated based on encoding the uplink data; and
detecting feedback information transmitted by a network device for the uplink data, on the transmission resource.

15. The UE according to claim 14, wherein the processor is used to read the computer program in the memory to perform the following operations:

receiving resource configuration information transmitted by the network device; wherein the resource configuration information is used to indicate at least one transmission resource and an identifier corresponding to each transmission resource;
wherein the resource configuration information includes at least one of the following: a quality of slots, a quantity of resources in each slot, time domain symbol resource position, frequency domain resource position, and an orthogonal sequence set.

16. The UE according to claim 14 or 15, wherein the processor is used to read the computer program in the memory to perform the following operations:

determining a target identifier according to the meta bit corresponding to the uplink data; and
determining a resource corresponding to the target identifier as the transmission resource.

17. The UE according to claim 16, wherein the processor is used to read the computer program in the memory to perform the following operations:

using the meta bit to perform a modulo operation on a total number of transmission resources configured by the network device to obtain the target identifier; or,
inputting the meta bit into a preset encoder, and determining an output result as the target identifier.

18. The UE according to claim 14 or 15, wherein the processor is used to read the computer program in the memory to perform the following operations:
if the feedback information indicates that the network device has not correctly received the uplink data, detecting downlink control information transmitted by the network device by using the meta bit, wherein the downlink control information is used to schedule the UE to retransmit the uplink data.

19. The UE according to claim 18, wherein the downlink control information is scrambled with the meta bit.

20. A network device, comprising: a memory, a transceiver, and a processor;
wherein the memory is used to store a computer program; the transceiver is used to transmit and receive data under control of the processor; and the processor is used to read the computer program in the memory to perform the following operations:

obtaining a transmission resource according to a meta bit transmitted by a user equipment (UE); wherein the meta bit is a bit stream generated based on encoding the uplink data; and

transmitting feedback information of the uplink data to the UE via the transmission resource.

21. The device according to claim 20, wherein the processor is used to read the computer program in the memory to perform the following operations:

transmitting resource configuration information to the UE; wherein the resource configuration information is used to indicate at least one transmission resource and an identifier corresponding to each transmission resource; wherein the resource configuration information includes at least one of the following: a quality of slots, a quantity of resources in each slot, time domain symbol resource position, frequency domain resource position, and an orthogonal sequence set.

22. The device according to claim 20 or 21, wherein the processor is used to read the computer program in the memory to perform the following operations:

determining a target identifier according to the meta bit; and
determining a resource corresponding to the target identifier as the transmission resource.

23. The device according to claim 22, wherein the processor is used to read the computer program in the memory to perform the following operations:

using the meta bit to perform a modulo operation on the total number of transmission resources configured by the network device to obtain the target identifier; or,
inputting the meta bit into a preset encoder, and determining an output result as the target identifier.

24. The device according to claim 20 or 21, wherein the processor is used to read the computer program in the memory to perform at least one of the following:

in case where the transmission resource corresponds to at least two UEs, if it is determined that uplink data of at least one UE among the at least two UEs is not correctly received, transmitting feedback information of the uplink data to the at least two UEs through the transmission resource, wherein the feedback information is used to indicate that the network device has not correctly received the uplink data;
in case where the transmission resource corresponds to at least two UEs, if it is determined that the uplink data of at least one UE among the at least two UEs is correctly received, transmitting feedback information of the uplink data to the at least two UEs through the transmission resource, wherein the feedback information is used to indicate that the network device correctly receives the uplink data.

25. The device according to claim 20 or 21, wherein the processor is used to read the computer program in the memory to perform the following operations:
if it is determined that the uplink data transmitted by the UE is not correctly received, transmitting downlink control information to the UE, wherein the downlink control information is used to schedule the UE to retransmit the uplink data.

26. The device according to claim 25, wherein the downlink control information is scrambled with the meta bit.

27. An information transmission device, applied to a user equipment (UE), comprising:

a determining unit used to determine a transmission resource according to a meta bit corresponding to uplink data; wherein the meta bit is a bit stream generated based on encoding the uplink data; and
a first detection unit used to detect feedback information transmitted by a network device for the uplink data, on the transmission resource.

28. The device according to claim 27, wherein the device further includes:

a receiving unit used to receive resource configuration information transmitted by the network device; wherein the resource configuration information is used to indicate at least one transmission resource and an identifier corresponding to each transmission resource;

wherein the resource configuration information includes at least one of the following: a quality of slots, a quantity of resources in each slot, time domain symbol resource position, frequency domain resource position, and an orthogonal sequence set.

29. The device according to claim 27 or 28, wherein the determining unit is used to:

determine a target identifier according to the meta bit corresponding to the uplink data; and
determine a resource corresponding to the target identifier as the transmission resource.

30. The device according to claim 29, wherein the determining a target identifier according to the meta bit corresponding to the uplink data, includes:

using the meta bit to perform a modulo operation on a total number of transmission resources configured by the network device to obtain the target identifier; or,
inputting the meta bit into a preset encoder, and determining an output result as the target identifier.

31. The device according to claim 27 or 28, wherein the device further includes:
a second detection unit used to, if the feedback information indicates that the network device has not correctly received the uplink data, detect downlink control information transmitted by the network device by using the meta bit, wherein the downlink control information is used to schedule the UE to retransmit the uplink data.

32. The device according to claim 27, wherein the downlink control information is scrambled with the meta bit.

33. An information transmission device, applied to a network device, comprising:

an obtaining unit used to obtain a transmission resource according to a meta bit transmitted by the UE; wherein the meta bit is a bit stream generated based on encoding the uplink data; and
a first transmission unit used to transmit feedback information of the uplink data to the UE via the transmission resource.

34. The device according to claim 33, wherein the device further includes:

a second transmission unit used to transmit resource configuration information to the UE; wherein the resource configuration information is used to indicate at least one transmission resource and an identifier corresponding to each transmission resource;
wherein the resource configuration information includes at least one of the following: a quality of slots, a quantity of resources in each slot, time domain symbol resource position, frequency domain resource position, and an orthogonal sequence set.

35. The device according to claim 33 or 34, wherein the obtaining unit is used to:

determine a target identifier according to the meta bit; and
determine a resource corresponding to the target identifier as the transmission resource.

36. The device according to claim 35, wherein the determining a target identifier according to the meta bit, includes:

using the meta bit to perform a modulo operation on the total number of transmission resources configured by the network device to obtain the target identifier; or,
inputting the meta bit into a preset encoder, and determining an output result as the target identifier.

37. The device according to claim 33 or 34, wherein the first transmission unit is used to perform at least one of the following:

in case where the transmission resource corresponds to at least two UEs, if it is determined that uplink data of at least one UE among the at least two UEs is not correctly received, transmitting feedback information of the uplink data to the at least two UEs through the transmission resource, wherein the feedback information is used to indicate that the network device has not correctly received the uplink data;
in case where the transmission resource corresponds to at least two UEs, if it is determined that the uplink data of at least one UE among the at least two UEs is correctly received, transmitting feedback information of the uplink data to the at least two UEs through the transmission resource, wherein the feedback information is used to indicate that the network device correctly receives the uplink data.

38. The device according to claim 33 or 34, wherein the device further includes:
a third transmission unit used to, if it is determined that the uplink data transmitted by the UE is not correctly received, transmit downlink control information to the UE, wherein the downlink control information is used to schedule the UE to retransmit the uplink data.

39. The device according to claim 38, wherein the downlink control information is scrambled with the meta bit.

40. A processor-readable storage medium, comprising: a computer program stored thereon; wherein the computer program is used to cause a processor to execute steps of the method according to any one of claims 1 to 13.

base station

UE

FIG. 1

| determining a transmission resource according to a meta bit corresponding to uplink data | S201 |

| detecting the feedback information of the uplink data transmitted by a network device on the transmission resource | S202 |

FIG. 2

| obtaining a transmission resource according to a meta bit transmitted by the UE | S301 |

| transmitting feedback information of the uplink data to the UE via the transmission resource | S302 |

FIG. 3

information transmission device — 400

determining unit — 401

first detection unit — 402

FIG. 4

—500
processor

bus interface

—510
transceiver

—520
memory

—530
user interface

FIG. 5

information transmission device — 600

obtaining unit — 601

first transmission unit — 602

FIG. 6

FIG. 7

# EP 4 742 810 A1

## INTERNATIONAL SEARCH REPORT

| | International application No. |
|---|---|
| | **PCT/CN2024/095722** |

**A. CLASSIFICATION OF SUBJECT MATTER**

H04W74/08(2024.01)i;  H04L1/18(2023.01)i;  H04L5/00(2006.01)i

According to International Patent Classification (IPC) or to both national classification and IPC

**B. FIELDS SEARCHED**

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

CNABS; CNTXT; CNKI; VEN; USTXT; EPTXT; WOTXT; 3GPP: 随机接入, 初始接入, 无源随机接入, 非协调随机接入和传输, 非正交多址接入, 多址, 数据传输, 融合, 元数据比特, 元比特, 上行数据, 编码, 循环冗余, 指数调制, 反馈, 确认, 物理下行反馈信道, URAT, Uncoordinated Random Access and Transmission, URA, NOMA, index modulation, CRC, feedback, ACK, NACK, HARQ, PDFCH

**C. DOCUMENTS CONSIDERED TO BE RELEVANT**

| Category* | Citation of document, with indication, where appropriate, of the relevant passages | Relevant to claim No. |
|---|---|---|
| A | CN 107370572 A (NTT DOCOMO INC.) 21 November 2017 (2017-11-21) description, paragraphs [0064]-[0087] and [0153]-[0175], and figures 1, 2, 13, and 14 | 1-40 |
| A | CN 110612684 A (HUAWEI TECHNOLOGIES CO., LTD.) 24 December 2019 (2019-12-24) entire document | 1-40 |
| A | US 2022264653 A1 (SAMSUNG ELECTRONICS CO., LTD.) 18 August 2022 (2022-08-18) entire document | 1-40 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **07 August 2024** | **14 August 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/095722**

| Patent document cited in search report | | | Publication date (day/month/year) | Patent family member(s) | | | Publication date (day/month/year) |
|---|---|---|---|---|---|---|---|
| CN | 107370572 | A | 21 November 2017 | JP | 6671762 | B2 | 25 March 2020 |
| | | | | WO | 2017194000 | A1 | 16 November 2017 |
| | | | | CN | 109075916 | A | 21 December 2018 |
| | | | | CN | 109075916 | B | 25 June 2021 |
| | | | | JP | 2019521541 | W | 25 July 2019 |
| CN | 110612684 | A | 24 December 2019 | WO | 2019023912 | A1 | 07 February 2019 |
| | | | | CN | 110612684 | B | 04 May 2021 |
| US | 2022264653 | A1 | 18 August 2022 | WO | 2021020832 | A1 | 04 February 2021 |
| | | | | EP | 3991501 | A1 | 04 May 2022 |
| | | | | EP | 3991501 | A4 | 31 August 2022 |
| | | | | KR | 20210012977 | A | 03 February 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310812558